# EUROPEAN PATENT SPECIFICATION

(11) **EP 1 434 986 B1**
(45) Date of publication and mention of the grant of the patent: **09.04.2008**
(21) Application number: 02798794.0
(22) Date of filing: 18.09.2002
(51) Int. Cl.: G01N 31/12, G01N 1/00

(54) **SAMPLER FOR AUTOMATIC ELEMENTAL ANALYSERS**
PROBENENTNAHMEGERÄT FÜR AUTOMATISCHE ELEMENTARANALYSEVORRICHTUNGEN
ECHANTILLONNEUR POUR ANALYSEURS D'ELEMENTS AUTOMATIQUES

(30) Priority: 19.09.2001 IT TO20010175
(43) Date of publication of application: 07.07.2004
(73) Proprietor: Eurovector S.p.A., 20144 Milano (IT)
(72) Inventor: SISTI, Leonardo, M., I-27050 Redavalle (IT); BOURSIER NIUTTA, Stefano, I-80100 Napoli (IT)
(74) Representative: Dini, Roberto
(86) International application number: PCT/IB2002/003836
(87) International publication number: WO 2003/025560

(56) References cited:
- EP-A- 0 585 802
- US-A- 4 351 193
- PATENT ABSTRACTS OF JAPAN vol. 018, no. 478 (P-1796), 6 September 1994 (1994-09-06) & JP 06 160402 A (KIKUSHIGE ONO), 7 June 1994 (1994-06-07)

## Description

The present invention provides means to direct the flow of a purge gas, designed to prevent retro-diffusion of ambient atmospheric gases into a sampler during the purging step of a sample to be analysed, in particular for an automatic elemental analyser. Typically, this instrumentation is suitable for measuring the contents of carbon, nitrogen, hydrogen, sulphur and oxygen in organic or inorganic solid or liquid samples.

It is also suitable for providing the isotopic analysis of these elements, when coupled to an IRMS detector.

US patent US-A-4 351 193 discloses a sampler comprising loading channel, a guide with an admission piston, a joining block between the loading channel and the guide, a purge chamber for the sample to be analysed, an admission system for a purge gas to said purge chamber, and an admission piston being movable inside said guide between a drop position and an feeding position of the sample to be analysed.

An Elemental automatic analyser, for which the Sampler is disclosed by the present application, is similar to the one described in the Utility Model no. BS 16853 filed in the name of the present Applicant, or other common analyser.

Operation of this analyser is based on the principle of dynamic combustion, called "flash combustion" of a sample to be analysed, with addition of Oxygen; other elemental analysers operating by combustion without adding any oxygen (Pyrolysis), are used for measuring the oxygen contained in the sample. After combustion, the gases produced by the combustion or pyrolysis, are passed by a carrier gas over suitable oxidizing catalysers for reaction completion. The gas flows through a reducing catalytic bed to eliminate oxygen excess and reduce nitrogen oxides to elemental nitrogen.

With reference to the elements to be analysed, the gases consisting of N₂, CO₂, H₂O, SO₂ flow through irreversible selective absorption traps and are mutually separated in a chromatographic column. The separated gases are detected by means of TCD and/or IR detectors and/or sent to an IRMS detector, the latter being suitable for measuring the isotopic contents of the elements themselves.

In practice, a common analyser is an instrument for analysing the elemental composition of carbon, hydrogen, nitrogen, sulphur, oxigen in a wide variety of sample materials, either in a solid or liquid form.

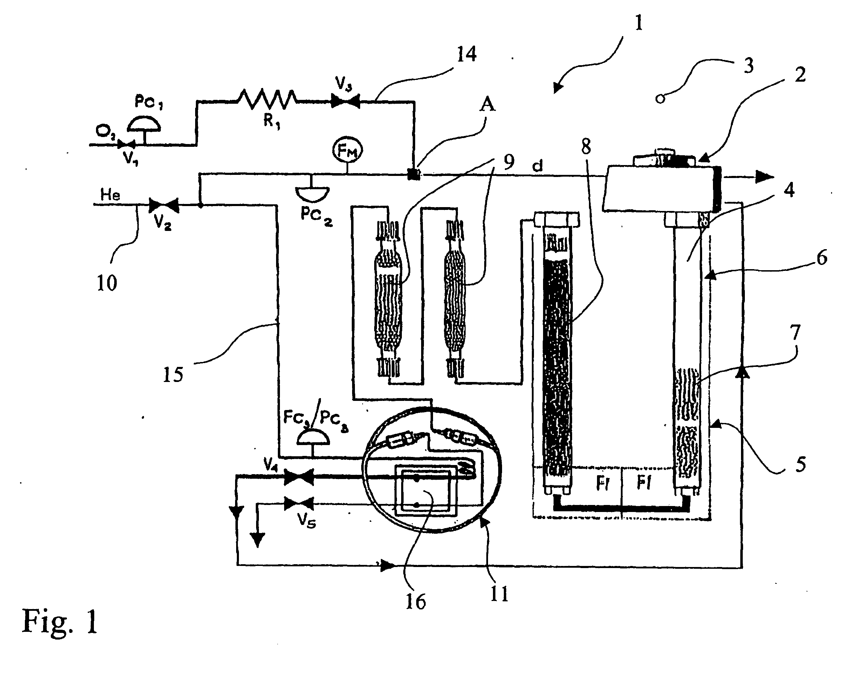

The annexed Figure 1 illustrates a schematic representation of a known automatic elemental analyser, maintaining the technical symbols in use for the various operating devices of the analyser.

Both the type and operation of an automatic elemental analyser, as labelled in its whole with 1, may be schematised in the following operating units:
- a sampler 2, being the object of the present invention, and being suitable for introducing a sample 3 to be analysed in a combustion reactor 4 with a continuous flow of carrying gas, also called carrier;
- a combustion system comprising an oven 5, housing a reaction tube 6 appropriately manufactured for catalytic combustion of the sample 3 to be analysed, i.e. a combustion reactor 4 with a first catalytic bed 7 being suitable for favouring a combustion reaction of the sample 3, and a second catalytic bed 8 for reducing the oxygen excess introduced and nitrogen oxides produced;
- traps 9 for irreversible elimination of the contents of CO₂ and H₂O, if required by the analytic configuration;
- a gas chromatographic column 11 housed in an isothermal gas chromatographic chamber, not shown in the figure, for separating the gases obtained from the combustion;
- a TCD detector 16 for detecting the individual gases after their separation;
- a likely IR detector arranged in series with the TCD detector 16, not represented in the figure for simplicity's sake;
- a likely IRMS detector in series with the TCD 16 or IR detector, not represented in the figure for simplicity's sake;
- a main pneumatic circuit 10 providing a constant carrier gas flow, usually helium or argon, through an electronic pressure regulator PC₂ and electronic flow meter F_{M}. Said carrier gas flows through the combustion reactors 4 and reduction reactors 8, traps 9 and chromatographic column 11, finally reaching the measuring cell of the TCD thermal conductivity detector 16;
- a derived pneumatic circuit 15 for admitting first a reference gas in the TCD, which will subsequently act also as purge gas for a sample 3 to be analysed, said purge or reference gas being the same gas as the carrier gas mentioned above, i.e. helium or argon;
- an automatic pneumatic oxygen metering system 14, the pressure of which is programmed independently from the other circuits, which flows into the main pneumatic circuit 10 at a junction A;
- an electronic system for controlling the operation of the various subsystems, not represented here for simplicity's sake. In particular, said electronic system comprises electronic pressure regulators, an electronic flow meter, the control circuits of the solenoid valves V₁, V₂, V₃ and temperature regulators of the oven 5 and of the GC chamber.

One gas line departs from one inert gas bottle not represented in the figure, usually delivering helium or argon, forming the main pneumatic circuit 10, from which the pneumatic circuit 15 previously described is derived for providing a constant flow of one gas called reference gas along a first path and purge gas along a subsequent path.

The automatic pneumatic oxygen metering system 14 usually comprises an admission line for oxygen, a set of solenoid valves V₁ and V₃, an electronic pressure regulator PC₁, a calibrated restrictor R₁. This system can inject automatically predetermined amounts of oxygen, since it is able to control the oxygen admission pressure programmable independently from the gas amounts flowing into the main circuit 10.

As to the operation and further specifications of the analyser, reference is made to the Italian Utility Model no. BS 16853 filed by the same Applicant.

In said automatic elemental analyser 1, said sampler 2 is used for introducing the sample 3 to be analysed into the combustion reactor 4, which is kept at a desired temperature by means of oven 5, the temperature of which, is electronically controlled by the above electronic system.

Said sampler 2 has to provide for admission of the sample 3 to be analysed without admission of ambient atmospheric gases, and likely polluting agents and fluids that may possibly be in contact with the above sampler 2. As better detailed in the following description, a purge step is performed for the sample 3 to be analysed. This purging step aims to completely wash a chamber, called hereafter purge chamber 34, from any atmospheric gases herein, said washing being executed by means of a constant purge gas flow through the purge chamber 34.

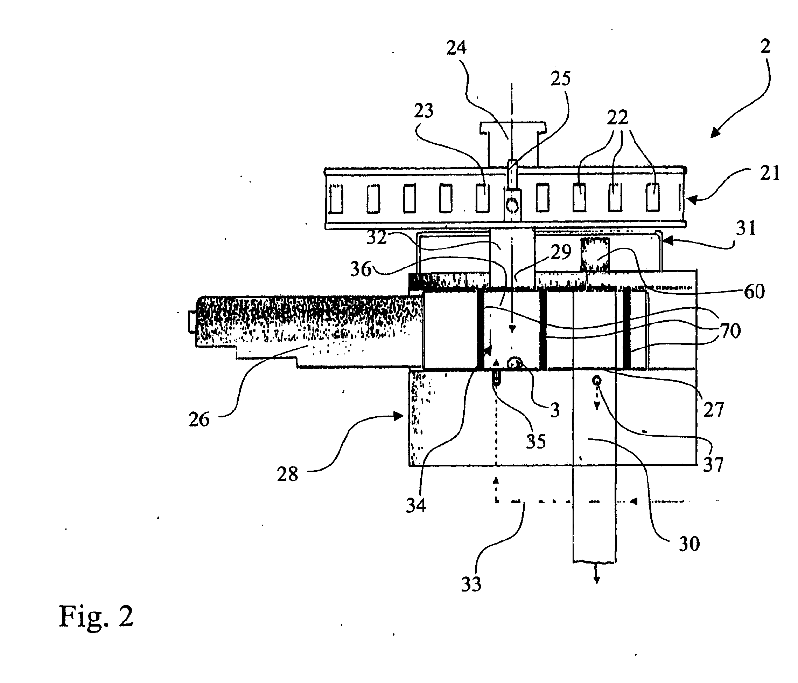

Figure 2 is illustrating a schematic front view of a common art sampler, indicated in its whole as 2, a so-called "drawer" type, electrically or pneumatically actuated, which comprises:
- a carousel device 21 housing the sample 3 to be analysed, consisting of a set of cavities 22 around its circumference; said carousel device 21 including usual technical elements, that enable its rotation about a fulcrum point, for alignment of a cavity 23, housing the sample 3 to be analysed, with a drop position 24. Said carousel device 21 includes, in alignment with the drop position 24 and over, venting means 25 which includes a cover plate of light material, resting on carousel device 21; said venting means 25 allows the purge gas to flow out, said purge gas flowing over the carousel top face, upon which the cover rests, thus preventing ambient atmospheric gases from retro-diffusing into sampler 2;
- an admission piston 26 for displacing the sample 3 to be analysed from said drop position 24 to a feeding position 27 for the reactor 4 of analyser 1. The movement of said admission piston 26 is controlled by an appropriate electric or pneumatic actuation system not indicated in Figure 1;
- a cylindrical guide 28, wherein the admission piston 26 is moving longitudinally, has a first passage 29 on its upper side aligned with said drop position 24, and a second passage 30 on its lower side aligned with said feeding position 27 for admitting sample 3 to be analysed into reactor 4 of analyser 1;
- a joining block 31 between said carousel device 21 and said above assembly of cylindrical guide 28 and admission piston 26, said joining block 31 having a passage 32 at drop position 24;
- a purge gas admission system 33 to a purge chamber 34, said purge chamber 34 being delimitated inside cylindrical guide 28 and inside joining block 31, where the admission piston 26 is in the drop position 24. Said position of the admission piston 26 may be defined as a "piston-out" position, i.e. a position corresponding to the configuration of sampler 2 illustrated in Figure 2.

Said purge gas admission system 33 allows said purge gas to flow into said purge chamber 34 for performing the purging step of sample 3 to be analysed. A purging step means the operation of removing the air molecules as well as other likely polluting substances in general, including gases absorbed by the surface of the capsule containing sample 3 to be analysed, through the action of a constant purge gas flow in the purge chamber 34 during the entire analysis cycle of a previous sample.

Said purge gas admission system 33 incorporates a diffuser 35 , which is lower housed and in a wall of said cylindrical guide 28; said diffuser 35 will then diffuse the purge gas from the bottom upwards. Said purge gas is conveyed there through an appropriate derivation of the purge gas admission system 33, not shown in Figure 2.

From this short description, the purge chamber 34 consists of:
- a passage 36 in the admission piston 26;
- said passage 32 in the above joining block 31;
- said first passage 29 in the cylindrical guide 28;
- a cavity 23 in the carousel device 21 aligned in the drop position 24 for the sample 3 to be analysed.

An inclined viewing mirror device 60, is positioned in the joining block 31, in the admission piston 26 and in the cylindrical guide 28. The admission piston 26 can slide in the cylindrical guide 28 by means of interposed sealing means 70. Through said viewing mirror device 60, sample 3 to be analysed can be viewed during the movement phases of the admission piston 26, and when said sample 3 drops into the reactor 4, and is also viewed to monitor combustion completion, called "flash" combustion, which is evidenced by a sudden bright flash due to a local temperature increase caused by the combustion itself.

Operation of a common sampler 2 is as follows.

The samples 3 to be analysed are previously introduced in appropriate capsules usually made from tin or silver. After having been weighed, they are individually placed in the set of cavities 22 of the carousel device 21, according to a predefined analytical sequence. After appropriate rotation of the carousel device 21 to the drop position 24, said sample 3 is displaced to passage 32 of said joining block 31, dropping into purge chamber 34 through the first passage 29 of the cylindrical guide 28, with admission piston 26 in its "piston-out" position.
Sample 3 to be analysed is flushed within purge chamber 34 by a continuous purge gas flowing from the purge gas admission system 33, where said diffuser 35 and the gas nature itself contribute to provide a fast diffusion into the purge chamber, with a flow of turbulent type, with consequent purging of said purge chamber 34.

After the completion of the analytical cycle for the previous sample in the analyser 1, the electric or pneumatic actuation system allows admission piston 26 to move longitudinally to a "piston-in" position.

The "piston-in" position is the specific piston position in which the inner passage 36 is positioned in the feeding position 27. Thus sample 3 to be analysed is brought in line with the second passage 30 of the cylindrical guide 28 by the movement of the admission piston 26 and will drop into the reactor 4 of the analyser 1.

In order to complete the automatic sampling cycle, the admission piston 26 has to go back to its "piston-out" position, the carousel device 21 subsequently rotates to bring a second cavity 38 of the defined set of cavities 22 of the carousel device 21 to the drop position 24 for the next sample 3 (or element of the defined analytic sequence) to be analysed. Simultaneously the electric or pneumatic actuation system causes the admission piston 26 to shift longitudinally in a direction opposite to the previous movement, i.e. from its "piston-in" position to a "piston-out" position, for admission of the next sample 3 into the purge chamber 34.

It must be noted that the purge gas is the same as the gas used as carrier gas in the elemental analyser 1 and that the carrier gas starts its own path as from sampler 2. In particular, the carrier gas flows into the chamber at feeding position 27 in the top part of the second passage 30 of the cylindrical guide through the carrier diffuser 37 in a downward direction.

Said common sampler 2 as previously described may not be able to prevent small amounts of ambient atmospheric gases from entering purge chamber 34 and the chamber at feeding position 27.

Amounts of ambient atmospheric gases, even in minimum quantities, may compromise the analysis results; the extent of compromise becomes more significant when higher levels of precision are required. This represents a definite drawback of the common technique, in particular in the instance of analysis performed with ultra sensitive detectors, i.e. detectors able to detect small amounts of foreign elements in the sample to be analysed.

As it is well known in the prior art, analysis of the samples is performed according to a known procedure subtracting the values obtained by the so-called blank analysis from total value obtained for a particular sample analysis, blank being defined as the result of the analysis performed without introducing any sample material in the instrument. This procedure for specific applications cannot avoid isotopic fractionation or increases of background and related problems associated to those items.

The presence of contaminating molecules the chamber at feeding position 27 is substantially due to two phenomena:
1. Possible infiltration of ambient atmospheric gases into admission piston 26 through sealing rings 70;
2. Retro-diffusion of ambient atmospheric gases into purge chamber 34 during the purge step of the sample to be analysed.

Potential infiltration of ambient atmospheric gases in purge chamber 34 may occur at the coupling between joining block 31 and carousel device 21.

This phenomenon is critical when carousel device 21 rotates to allow the next sample 3 to be analysed to drop from cavity 23 into purge chamber 34, when it reaches drop position 24.

This phenomenon of retro-diffusion is the differences in the concentration of gases present between the ambient atmospheric gases and the purge gas itself.

Elimination of the majority of undesired ambient atmospheric gases from purge chamber 34 takes place quickly at the beginning of the analytical cycle or analyser starting and becomes far more difficult when there is a need to eliminate the residual traces, due to the phenomenon of retro-diffusion of gases present in the ambient atmospheric gases. A competition of equilibrium takes place between said retro-diffusion of ambient atmospheric gases and said evacuation by the purge gas, both processes being related to gas concentration, pressure and speed

The cylindrical shape of purge chamber 34, allows the purge gas, usually Helium or Argon, to diffuse with elimination of gas contaminants through the cover on the carousel device. Said cover, together with the passage from said purge chamber, are all parts of the venting means 25 for the purge gas. They present a considerable resistance to the retro-diffusion phenomenon previously described. They constitute an efficient filtration barrier against infiltration of contaminant gases under the action of the continuous flow of purge gas.

The equilibrium that is achieved with all mentioned parameters is acceptable for the analysis of samples in some applications, while for other applications the level of equilibrium is unacceptable and constitute an insuperable limitation when trying to achieve the desired level of accuracy and also when combining with some other sophisticated analytical techniques like that of the use of mass detectors for the evaluation of isotopic ratio, leading to inaccuracies of the results.

In addition, increasing the purge gas flow does not allow, in the present reported conditions, a significant change in the quality of evacuation, a plateau being achieved that cannot be further improved.

It is the object of the present invention to eliminate the drawbacks described, in particular to eliminate the retro-diffusion phenomenon of ambient atmospheric gases into the purge chamber, ensuring complete purging of the purge chamber by the purge gas, thus achieving the highest quality of analytical results from the technique of elemental analysis incorporating the ultra sensitive detectors currently available, even when loading additional samples onto the carousel device during the analytical cycle without interrupting the analysis and stopping the instrument.

A further object of the present invention is to guarantee air tightness of the purge chamber at the drop position, in particular between the rotating element of the carousel device and the joining block between the carousel device and the cylindrical guide.

A further object is to guide the fall of the sample within the purge chamber to facilitate and to rationalise the subsequent step of purging the sample itself.

In order to achieve these aims, it is the object of the present invention to provide a means to direct the flow incorporating the features of the annexed claims and which forms an integral part of the description herein.

Further objects, features and advantages will become apparent from the following detailed description of a preferred, non-exclusive embodiment of the present invention that is represented in the annexed drawings, which are supplied by way of a non - limiting example, wherein:
- Figure 1 is a schematic view of the whole elemental automatic analyser system according to the known art;
- Figure 2 is a schematic front view of a sampler according to the known art;
- Figure 3 is a schematic front view of a sampler according to the present invention;
- Figure 4 is a more detailed schematic front view of the sampler in Figure 3.

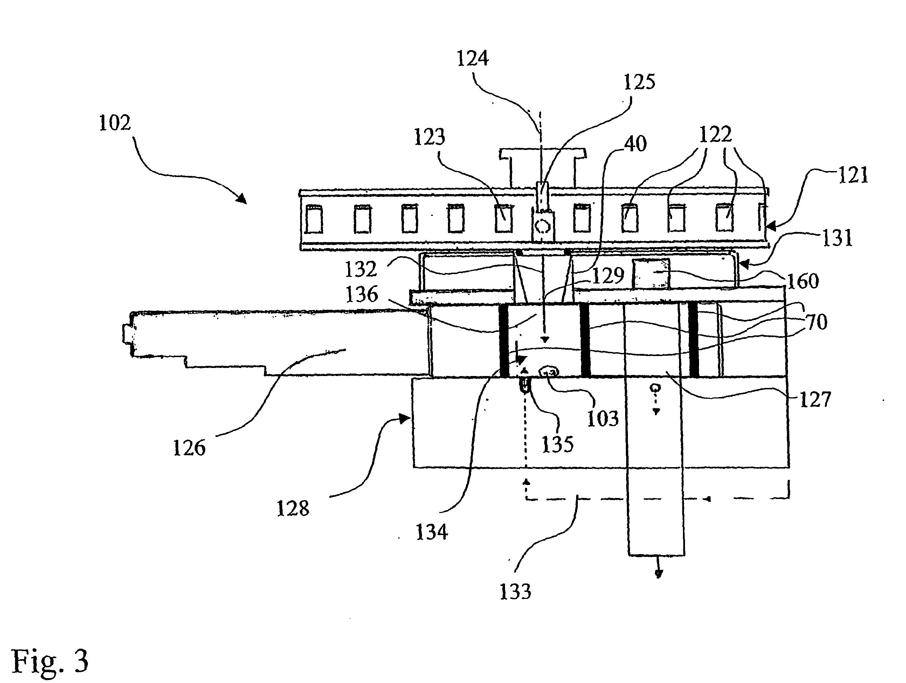

Figure 3 is illustrating a sampler according to the present invention, indicated in its whole as 102, in particular for automatic elemental analysers. Said sampler 102 comprises means to direct the flow, indicated as a whole as 40, and designed to prevent retro-diffusion of ambient atmospheric gases during the purge of a sample to be analysed.

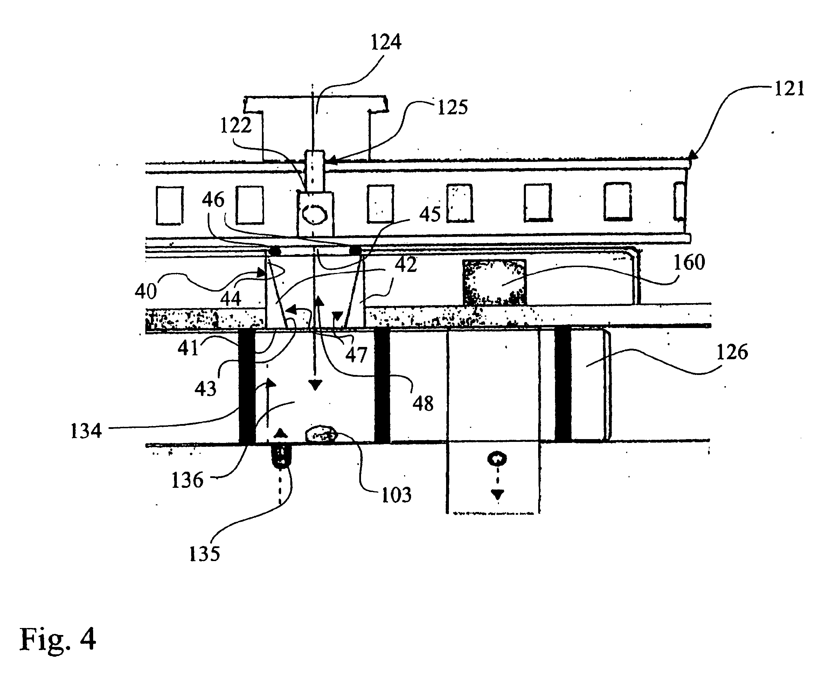

In Figures 3 and 4 the same references as those for the known sampler 2 shown in Figure 2, are used but they are incremented 100.

The description of sampler 102 is similar to that of known sampler 2 to which detailed reference is made and with consideration of the differences and clarification that are indicated subsequently. In particular, purge chamber 134 clearly represented in Figure 4 now comprises:
- a passage 136 within an admission piston 126;
- a passage 132 in the joining block 131;
- a cavity 123 of the carousel device 121 aligned at the drop position 124 for sample 103 to be analysed;
   means to direct the flow indicated as a whole as 40, apt to be fitted inside said purge chamber 134 in the space delimitated by the passage 132 of said joining block 131 and a first passage 129 of the cylindrical guide 128, said means 40 extending through to and in contact with the lower face 41 of the upper wall of cylindrical guide 128.

In particular, said means to direct the flow 40 comprises a main element 42, which has a truncated cone shape and is arranged lengthwise inside the purge chamber 134; said main element 42 having a smaller section 43 located below and in communication with the upper section of passage 136 of admission piston 126.

At the other end, the portion with larger section 44 of the main element 42 with a truncated conical shape is in communication with drop passage 45 of the carousel device 121; the larger portion 44 being in contact with the drop passage 45 through the interposition of a sealing ring 46. The portion with the larger section 44 and sealing ring 46 belong to sealing means to provide gas tightness for said means to direct the flow 40.

The main element 42 of said means to direct the flow 40 comprises a sliding surface 47 with a truncated cone shape, delimitating with said part of larger section 44 and smaller section 43, an internal duct 48 to the purge chamber 134, which is arranged lengthwise and diverging from the bottom upwards. It should be noted that the truncated conical surface is a surface of regular shape with its curved part at a very small angle or zero. Such a shape allows the fluid vein of the purge gas to be attached to the sliding surface 47 during the purge step of the sample 103 to be analysed, resulting substantially in a unidirectional and not vortical flow from the bottom upwards. Opportunely, the same fluid dynamic effect can be obtained with a different regular surface at a small angle; in particular when the surface forms an angle of a few degrees with the fluid veins. Thus the fluid vein itself keeps in contact to the wall and does not separate further downstream if not in particular conditions that are unlikely verifiable for the duct in subject.

The swirling characteristics of the purge gas flow at the inlet of the portion with smaller section 43 of said main element 42, decrease as the purge gas flows through said main element 42, being attached to the regular diverging sliding surface 47 according to the Coanda effect. The regular and diverging shape of said sliding surface 47, diverging in the direction of purge gas flow facilitates gradual recovery of the gas pressure. Said means to direct the flow 40 determines a dynamic pressure recovery and contributes to make the flow even and unidirectional, preventing any possible admission of residual ambient atmospheric gases and regulating the gas outflow from reactor 4.

It must be pointed out that sliding surface 47 of means to direct the flow 40, being of truncated conical shape, directs sample 103 to be analysed during its drop from cavity prior art; so for parts not mentioned, reference is made to the operation of known sampler 2 as previously described in Figure 1, remembering that the numerical references are incremented by 100.

From the previous description, the features of the present invention and its advantages are clear.

Means to direct the flow allows the complete elimination of residual ambient atmospheric gases from the purge chamber, during the purge step of a sample to be analysed. Furthermore, it will prevent the presence of any residual trace of ambient atmospheric caused either by retro-diffusion or by infiltration into the admission chamber of the sample to be analysed.

Advantageously, a usual operator of the elemental analyser, according to the present invention, has the possibility of loading additional samples onto the carousel device during the analytical cycle, without interrupting the analysis or stop the instrument.

A further advantage is to guarantee air tightness of the purge chamber at the drop position, in particular between the rotating element of the carousel device and the joining block between the device and the cylindrical guide.

A further advantage of the sampling device according to the present invention is the ability to direct the sample to be analysed to drop at a precise position inside the purge chamber, thus facilitating and rationalising the subsequent operation of purging the sample itself.

The improvement obtained by the present invention is evidenced not only through standard procedures, but also by using ambient atmospheric gases contamination techniques i.e. by the artificial introduction of molecules not normally found in the ambient atmospheric gases. These techniques often rely on absolute methods of detection such as mass spectrometry.

It is obvious that many changes are possible for the man skilled in the art of the present invention, without departing from the novelty of the inventive step.

Furthermore all details previously described may be substituted by other technically equivalent elements that are within the scope of the inventive concept.

In practice, materials used and dimensions may vary according to requirements.

## Claims

1. A sampler, in particular for automatic elemental analysers, comprising loading means (121), a guide (128) housed inside an admission piston (126), a joining block (131) between said loading means (121) and said guide (128), a purge chamber (134) for a sample (103) to be analysed, an admission system (133) and venting means (125) for a purge gas flowing through said purge chamber (134), the latter comprising:
- an inner passage (136) of said admission piston (126), said admission piston (126) being movable inside said guide (128) between a drop position (124) and an feeding position (127) of the sample (103) to be analysed;
- a passage (132) of said joining block (131);
- a cavity (123) of said loading means (121) aligned with the drop position (124) for the sample (103) to be analysed;
**characterized in that** it comprises means to direct the flow (40) toward said venting means (125), said means to direct the flow (40) being fitted in said purge chamber (134) and comprising a restriction or smaller section (43) for said purge chamber (134) and a regular and sliding surface (47) diverging in the direction of the purge gas flow.

2. A sampler according to claim 1, **characterized in that** said means to direct the flow (40) comprise a main element (42) inside said purge chamber (134), suitable to be fitted in the space delimited by said passage (132) of said joining block (131) and a first passage (129) of said guide (128).

3. A sampler according to the previous claims, **characterized in that** said main element (42) of said means to direct the flow (40) comprises:
- said smaller section (43) being located below and in communication, in -its assembled position, with the upper portion of said inner passage (136) of said admission piston (126);
- a portion with a larger section (44) in communication, in its assembled position, with a drop section (45) of said loading means (121);
- said sliding surface (47) for the purge fluid, delimitated inside said main element (42) between said portion with a smaller section (43) and said portion with a larger section (44), the sliding surface (47) being suitable for delimitating an inner duct (48).

4. A sampler according to the previous claim, **characterized in that** said sliding surface (47) of said main element (42) has a regular shape and a curved surface at a small angle.

5. A sampler according to the claims 3 or 4, **characterized in that** said sliding surface (47) of said main element (42) comprises a curved surface at zero angle.

6. A sampler according to claim 3 or subsequent ones, **characterized in that** said sliding surface (47) of said main element (42) is a truncated cone surface.

7. A sampler according to claim 3, **characterized in that** it comprises sealing means (46) in line with said portion with a larger section (44) of said main element (42).

8. A sampler according to the previous claim, **characterized in that** said sealing means comprises a sealing ring (46) between said portion With a larger section. (44) and said drop section (45) of said loading means (121).

9. A sampler according to one or more of the previous claims, **characterized in that** said purge gas flowing in the purge gas admission system (133) is the same gas as that flowing through the automatic elemental analyser (1) for correct performance of the combustion, and analysis operations of the sample (103) to be analysed.

10. A sampler according to one or more of the previous claims, **characterized in that** said guide (128) comprises a substantially cylindrical shaped guide.

11. A sampler according to one or more of the previous claims, **characterized in that** said loading means (121) comprises a carousel device.

12. An automatic elemental analyser comprising a sampler (102) according to one or more of the previous claims.

## Patentansprüche

1. Probenentnahmegerät, insbesondere für automatische Elementaranalysenvorrichtungen enthaltend: Lademittel (121), eine Führung (128), die einen Einlasskolben (126) aufnimmt, einen Verbindungsblock (131), der zwischen den Lademitteln (121) und der Führung (128) angeordnet ist, eine Reinigungskammer (134) für eine zu analysierende Probe (103), ein Einlaßsystem (133) und Belüftungsmittel (125) für ein Reinigungsgas, das durch die Reinigungskammer (134) strömt, letztere enthaltend:
- einen inneren Kanal (136) in dem Einlasskolben (126), wobei der Einlasskolben in der Führung (128) zwischen einer Freigabeposition (124) und einer Zuführposition (127) für die zu analysierende Probe (103) bewegbar ist;
- einen Kanal (132) in dem Verbindungsblock (131);
- einen Hohlraum (123) in den Lademitteln (121), der mit der Freigabeposition (124) für die zu analysierende Probe (103), ausgerichtet ist;
**dadurch gekennzeichnet, dass** das Probenentnahmegerät Mittel zur Führung der Strömung (40) in Richtung auf die Belüftungseinrichtung (125) enthält, wobei diese Mittel zur Führung der Strömung (40) in die Reinigungskammer (134) eingepasst sind und eine Verengung oder schmäleren Abschnitt (43) für die Reinigungskammer (134) sowie eine ebenmäßige Gleitfläche (47) enthalten, die sich in Richtung der Reinigungsgasströmung hin verbreitert.

2. Probenentnahmegerät nach Anspruch 1, **dadurch gekennzeichnet, dass** die Mittel zur Führung der Strömung (40) ein innerhalb der Reinigungskammer befindliches Hauptelement (42) enthalten, welches geeignet ist, in den Raum eingepasst zu werden, der zwischen dem Kanal (132) des Verbindungsblocks (131) und einem ersten Kanal (129) der Führung (128) begrenzt ist.

3. Probenentnahmegerät nach den vorangegangenen Ansprüchen, **dadurch gekennzeichnet, dass** das Hauptelement (42) der Mittel zur Führung der Strömung (40) enthält;
- den schmäleren Abschnitt (43), welcher sich unten befindet, und in seiner Montageposition in Verbindung mit dem oberen Abschnitt des inneren Kanals (136) des Einlasskolbens (126) steht;
- einen Teilbereich mit einem größeren Abschnitt (44), der sich in seiner Montageposition in Verbindung mit einem Auswurfabschnitt (45) der Lademittel (121) befindet;
- die Gleitfläche (47) für das Reinigungsfluid, die im Inneren des Hauptelements (42) durch den Teilbereich mit dem schmäleren Abschnitt (43) und den Teilbereich mit dem größeren Abschnitt (44) begrenzt wird, wobei die Gleitfläche (47) dazu beschaffen ist, um den inneren Kanal (48) zu bilden.

4. Probeentnahmegerät nach dem vorangegangenen Anspruch, **dadurch gekennzeichnet, dass** die Gleitfläche (47) des Hauptelements (42) eine gerade Form und eine gekrümmte Oberfläche mit einem kleinen Winkel aufweist.

5. Probeentnahmegerät nach Anspruch 3 oder 4, **dadurch gekennzeichnet, dass** die Gleitfläche (47) des Hauptelements (42) eine gekrümmte Oberfläche mit einem Nullgrad Winkel enthält.

6. Probeentnahmegerät nach Anspruch 3 oder den nachfolgenden Ansprüchen, **dadurch gekennzeichnet, dass** die Gleitfläche (47) des Hauptelements (42) eine kegelstumpfartige Konusfläche ist.

7. Probeentnahmegerät nach Anspruch 3, **dadurch gekennzeichnet, dass** es ein Dichtungsmittel (46) enthält, das an dem Teilbereich mit dem größeren Abschnitt (44) des Hauptelements (42) angebracht ist.

8. Probeentnahmegerät nach dem vorangegangenen Anspruch, **dadurch gekennzeichnet, dass** das Dichtungsmittel einen Dichtungsring (46) enthält, der sich zwischen dem Teilbereich mit dem größeren Abschnitt (44) und dem Auswurfabschnitt (45) der Lademittel (121) befindet.

9. Probeentnahmegerät nach einem oder mehreren der vorangegangenen Ansprüchen, **dadurch gekennzeichnet, dass** das Reinigungsgas, das in das Reinigungsgaseinlaßsystem (133) einströmt, das selbe Gas ist, das durch das automatische Elementaranalysengerät (1) zur richtigen Durchführung der Verbrennung und der Analysevorgänge der zu analysierenden Probe (103) strömt.

10. Probeentnahmegerät nach einem oder mehreren der vorangegangenen Ansprüchen, **dadurch gekennzeichnet, dass** die Führung (128) eine im Wesentlichen zylinderförmige Führung enthält.

11. Probeentnahmegerät nach einem oder mehreren der vorangegangenen Ansprüchen, **dadurch gekennzeichnet, dass** die Lademittel (121) eine Karusselleinrichtung enthält.

12. Automatisches Elementaranalysengerät, enthaltend ein Probeentnahmegerät (102) nach einem oder mehreren der vorangegangenen Ansprüchen.

## Revendications

1. Echantilloneur, en particulier pour des analyseurs d'éléments automatiques, comprenant des moyens de chargement (121), un guide (128) logé à l'intérieur d'un piston d'admission (126), un bloc de raccordement (131) entre lesdits moyens de chargement (121) et ledit guide (128), une chambre de purge (134) pour un échantillon (103) devant être analysé, un système d'admission (133) et des moyens d'aération (125) pour un gaz de purge circulant à travers ladite chambre de purge (134), cette dernière comprenant :
- un passage interne (136) dudit piston d'admission (126), ledit piston d'admission (126) étant mobile à l'intérieur dudit guide (128) entre une position de descente (124) et une position d'avance (127) de l'échantillon (103) devant être analysé ;
- un passage (132) dudit bloc de raccordement (131);
- une cavité (123) desdits moyens de chargement (121) alignée avec la position de descente (124) pour l'échantillon (103) devant être analysé ;
**caractérisé en ce qu'**il comprend des moyens pour diriger le flux (40) en direction desdits moyens d'aération (125), lesdits moyens pour diriger le flux (40) étant ajustés dans ladite chambre de purge (134) et comprenant une restriction ou une section plus petite (43) pour ladite chambre de purge (134) et une surface régulière et glissante (47) divergeant dans la direction du flux de gaz de purge.

2. Echantilloneur selon la revendication 1, **caractérisé en ce que** lesdits moyens pour diriger le flux (40) comprennent un élément principal (42) à l'intérieur de ladite chambre de purge (134) adapté de manière à être ajusté dans l'espace délimité par ledit passage (132) dudit bloc de raccordement (131) et un premier passage (129) dudit guide (128).

3. Echantilloneur selon les revendications précédentes, **caractérisé en ce que** ledit élément principal (42) desdits moyens pour diriger le flux (40) comprend :
- ladite section plus petite (43) située sous et en communication avec, dans sa position assemblée, la partie supérieure dudit passage interne (136) dudit piston d'admission (126);
- une partie avec une section plus grande (44) en communication, dans sa position assemblée, avec une section de descente (45) desdits moyens de chargement (121);
- ladite surface glissante (47) pour le liquide de purge, délimitée à l'intérieur dudit élément principal (42) entre ladite partie avec une section plus petite (43) et ladite partie avec une section plus grande (44), la surface glissante (47) étant adaptée pour délimiter un conduit interne (48).

4. Echantilloneur selon la revendication précédente, **caractérisé en ce que** ladite surface glissante (47) dudit élément principal (42) a une forme régulière et une surface incurvée selon un angle faible.

5. Echantilloneur selon les revendications 3 et 4, **caractérisé en ce que** ladite surface glissante (47) dudit élément principal (42) comprend une surface incurvée selon un angle de zéro.

6. Echantilloneur selon la revendication 3 et les revendications suivantes, **caractérisé en ce que** ladite surface glissante (47) dudit élément principal (42) est une surface de cône tronqué.

7. Echantilloneur selon la revendication 3, **caractérisé en ce qu'**il comprend des moyens d'étanchéité (46) alignés avec ladite partie avec une section plus grande (44) dudit élément principal (42).

8. Echantilloneur selon la revendication précédente, **caractérisé en ce que** lesdits moyens d'étanchéité comprennent un anneau d'étanchéité (46) entre ladite partie avec une section plus grande (44) et ladite partie de descente (45) desdits moyens de chargement (121).

9. Echantilloneur selon l'une ou plusieurs des revendications précédentes, **caractérisé en ce que** ledit gaz de purge circulant dans le système d'admission de gaz de purge (133) est le même gaz que celui circulant à travers l'analyseur d'éléments automatiques (1) pour une bonne performance de la combustion et des opérations d'analyse de l'échantillon (103) devant être analysé.

10. Echantilloneur selon l'une ou plusieurs des revendications précédentes, **caractérisé en ce que** ledit guide (128) comprend un guide de forme essentiellement cylindrique.

11. Echantilloneur selon l'une ou plusieurs des revendications précédentes, **caractérisé en ce que** lesdits moyens de chargement (121) comprennent un chariot.

12. Analyseur d'éléments automatiques comprenant un échantillonneur (102) selon l'une ou plusieurs des revendications précédentes.
